# EUROPEAN PATENT SPECIFICATION

(11) **EP 3 486 008 B1**
(45) Date of publication and mention of the grant of the patent: **20.07.2022**
(21) Application number: 18204746.4
(22) Date of filing: 06.11.2018
(51) Int. Cl.: B22F 10/28, B22F 12/30, B33Y 10/00, B33Y 30/00, B29C 64/153, B29C 64/245, B33Y 40/00

(54) **POWDER REDUCTION APPARATUS**
PULVERREDUZIERUNGSVORRICHTUNG
APPAREIL DE RÉDUCTION DE POUDRE

(30) Priority: 17.11.2017 US 201715816746
(43) Date of publication of application: 22.05.2019
(73) Proprietor: General Electric Company, Schenectady, NY 12345 (US)
(72) Inventor: HABIB, Michelle Lynn, Cincinnati, OH Ohio 45223 (US); FIELDMAN, Zachary David, Marina del Ray, CA California 90292 (US); BANKS, Laura, Cincinnati, OH 45224 (US); HALL, Christopher, West Chester, OH Ohio 45069 (US)
(74) Representative: Hafner & Kohl PartmbB

(56) References cited:
- EP-A1- 3 106 288
- DE-A1-102009 020 987
- DE-A1-102010 020 416
- GB-A- 2 543 305
- US-A1- 2007 026 099

## Description

### INTRODUCTION

The present disclosure relates generally to methods and apparatuses for additive manufacturing using powder-based build materials. More specifically, the disclosure relates to reducing the amount of powder needed to complete a build.

### BACKGROUND

Additive manufacturing (AM) or additive printing processes generally involve the buildup of one or more materials to make a net or near net shape (NNS) object, in contrast to subtractive manufacturing methods. Though "additive manufacturing" is an industry standard term (ASTM F2792), AM encompasses various manufacturing and prototyping techniques known under a variety of names, including freeform fabrication, 3D printing, rapid prototyping/tooling, etc. AM techniques are capable of fabricating complex components from a wide variety of materials. Generally, a freestanding object can be fabricated from a computer aided design (CAD) model. Direct metal laser melting (DMLM), which is one particular type of AM process, uses electromagnetic radiation such as a laser beam, to melt or sinter a powdered material, creating a solid three-dimensional object.

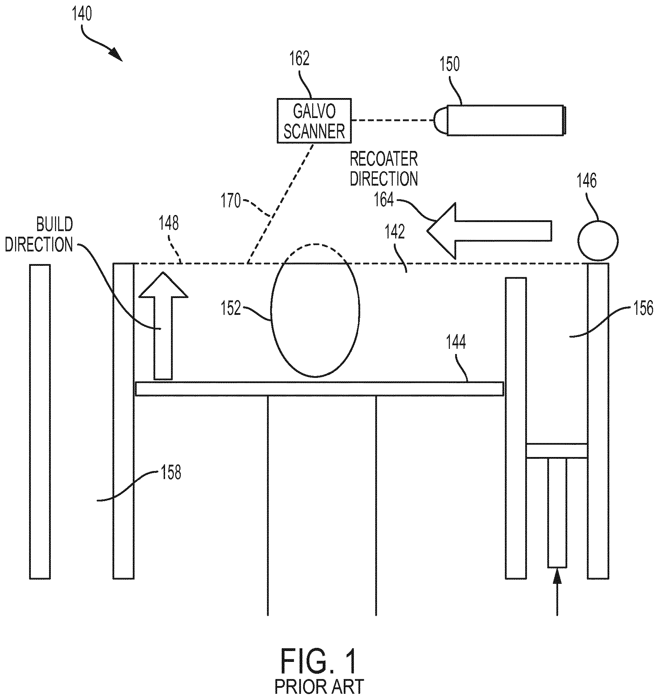

An example of an apparatus for AM using a powdered build material is shown in Fig. 1. The apparatus 140 builds objects or portions of objects, for example, the object 152, in a layer-by-layer manner by sintering or melting a powder material (not shown) using an energy beam 170 generated by a source 150, which can be, for example, a laser for producing a laser beam, or a filament that emits electrons when a current flows through it. The powder to be melted by the energy beam is supplied by reservoir 156 and spread evenly over a powder bed 142 using a recoater arm 146 travelling in direction 164 to maintain the powder at a build level 148 and remove excess powder material extending above the powder level 148 to waste container 158. The energy beam 170 sinters or melts a cross sectional layer of the object being built under control of an irradiation emission directing device, such as a laser galvo scanner 162. The galvo scanner 162 may comprise, for example, a plurality of movable mirrors or scanning lenses. The speed at which the energy beam is scanned is a critical controllable process parameter, impacting the quantity of energy delivered to a particular spot. Typical energy beam scan speeds are on the order of 10 to 1000 millimeters per second. The build platform 144 is lowered and another layer of powder is spread over the powder bed and object being built, followed by successive melting/sintering of the powder by the laser 150. The powder layer is typically, for example, 10 to 100 microns in thickness. The process is repeated until the object 152 is completely built up from the melted/sintered powder material. The energy beam 170 may be controlled by a computer system including a processor and a memory (not shown). The computer system may determine a scan pattern for each layer and control energy beam 170 to irradiate the powder material according to the scan pattern. After fabrication of the object 152 is complete, various post-processing procedures may be applied to the object 152. Post-processing procedures include removal of excess powder by, for example, blowing or vacuuming. Other post processing procedures include a stress relief heat treat process. Additionally, thermal and chemical post processing procedures can be used to finish the object 152.

Currently, as the DMLM part is built, enough powder must be used so that the entire build platform is completely covered in powder, even in areas where no parts will be built. As a result, large quantities of powder are necessary, but only to cover the platform and not to be used in the built. Often, the excess powder becomes contaminated and cannot be reused without post-processing. Both of these factors contribute to high powder overhead and increased costs. There may also be health risks associated with inhalation of loose powders. Additional equipment for isolating the powder environment and air filtration may be necessary to reduce these health risks. Moreover, in some situations, loose powder may become flammable. Clearly, the aforementioned risks only grow with larger quantities of powder.

In view of the foregoing, it is desirable to develop more efficient methods of powder-based additive manufacturing.

EP 3 106 288 A1 discloses an additive manufacturing apparatus.

DE 10 2010 020 416 A1 discloses an additive manufacturing apparatus.

DE 10 2009 020 987 A1 discloses an additive manufacturing apparatus.

### SUMMARY

The following presents a simplified summary of one or more aspects of the present disclosure in order to provide a basic understanding of such aspects. This summary is not an extensive overview of all contemplated aspects and is intended to neither identify key or critical elements of all aspects nor delineate the scope of any or all aspects. Its purpose is to present some concepts of one or more aspects in a simplified form as a prelude to the more detailed description that is presented later.

The invention is defined by the appended claims. In one aspect, the present invention is directed to an apparatus for additive manufacturing of at least one object according to claim 1. In some aspects, the insert further comprises a second build area separate from the first build area, the second build area having a second build support. In some aspects, the first build support comprises a resilient liner that interfaces with the walls of the first build area to reduce or eliminate passage of powder around the first build support. In some aspects, the first and second build areas are substantially identical in geometry in a horizontal plane. In some aspects, the first and second build areas differ in geometry in a horizontal plane. In some aspects, the first and second build areas are complementary.

In another aspect, the present disclosure is directed to a method of additive manufacturing of at least one object according to claim 7. In some aspects, wherein the first build support is configured to receive a substrate, wherein the substrate is a near-net shape of the object, and wherein the substrate defines a floor of the first build area. In some aspects, step (a) further comprises fusing at least a second portion of a given layer of build material to form a second fused region located in a second build area, the second build area defined by a second opening in the build insert, and the second build area being supported by a second build support; step (b) further comprises providing a subsequent layer of the build material over the second fused region; and step (c) comprises repeating steps (a) and (b) until the first object is formed in the first build area and the second object is formed in the second build area. In some aspects, the first and second build areas are substantially identical in geometry in a horizontal plane. In some aspects, the first and second build areas differ in geometry in a horizontal plane. In some aspects, the first and second build areas are complementary. In some aspects, each of the first and second build areas is supported by a build support adapted to support powder within the respective build area and configured to step downward as the objects are being build layer-by-layer. In some aspects, step (b) comprises stepping downward the first and second build supports prior to providing the subsequent layer of build material, such that a floor of each of the first and second build areas is recessed relative to the plane of the build level. In some aspects, the first build support comprises a resilient liner that interfaces with the walls of the first build area to reduce or eliminate passage of powder around the first build support. In some aspects, the fusing comprises irradiating with a laser beam or an electron beam. In some aspects, the fusing comprises binder jetting.

These and other aspects of the invention will become more fully understood upon a review of the detailed description, which follows.

### BRIEF DESCRIPTION OF THE DRAWINGS

Fig. 1 shows an example of an apparatus for AM according to conventional methods.
Fig. 2A shows a schematic of an apparatus for AM according to some aspects of the present disclosure.
Fig. 2B shows an example of an apparatus for additive manufacturing of two or more objects according to some aspects of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components are shown in block diagram form in order to avoid obscuring such concepts.

The present disclosure is directed to methods and apparatuses for powder-based AM using reduced amounts of powder compared to conventional methods and apparatuses, or more efficient use of powder-based build materials. A powder reduction apparatus according to the present disclosure may be an "insert" or "build insert" that is placed in the build platform of a conventional apparatus for AM, such as a DMLM apparatus. The insert divides the build area of the powder bed into one or more smaller build areas. Methods of AM using such apparatuses will advantageously require less powder for the build, for example, by reducing or eliminating the need to fill areas of the build platform or build surface where no parts are being built. Apparatuses according to the present disclosure may allow powder to be layered only in areas where needed. The amount of powder required may be decreased by as much as 50% compared to conventional powder bed methods.

In addition, the apparatus in accordance with the present invention enables building of one or more parts in individual build zones or build areas. This reduces the amount of powder used relative to traditional powder beds. It also enables one-piece flow and creates ergonomic benefit to the operator. Additionally, AM using the methods and apparatuses of the present disclosure may decrease the risk of short powder feeds, and the use of individual substrates decreases the weight of the built part and platform that are being processed. In addition, methods and apparatuses of the present disclosure may eliminate the need for EDM wire cutting, to remove the completed, built parts from the build plate, thus further reducing manufacturing costs. In some aspects, a wire EDM cut is not used. In other aspects, a wire EDM cut is used in conjunction with the methods and apparatuses of the present disclosure to remove the completed, built parts from the plate.

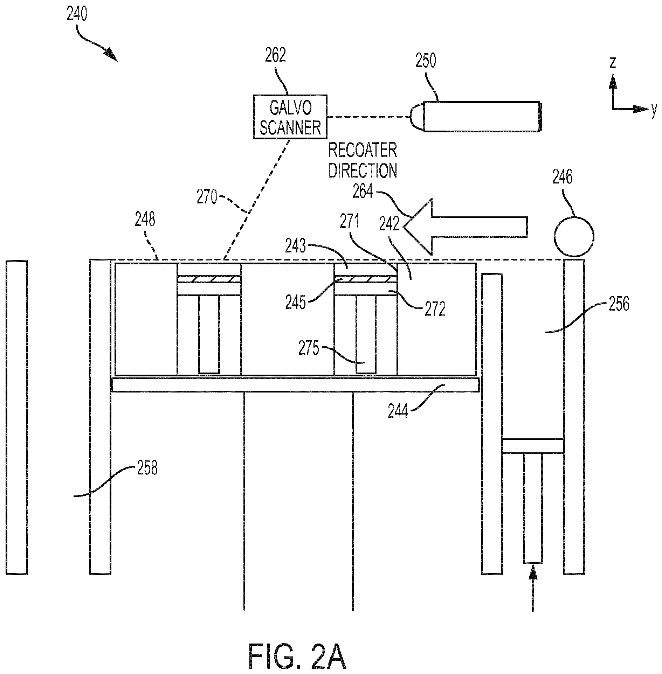

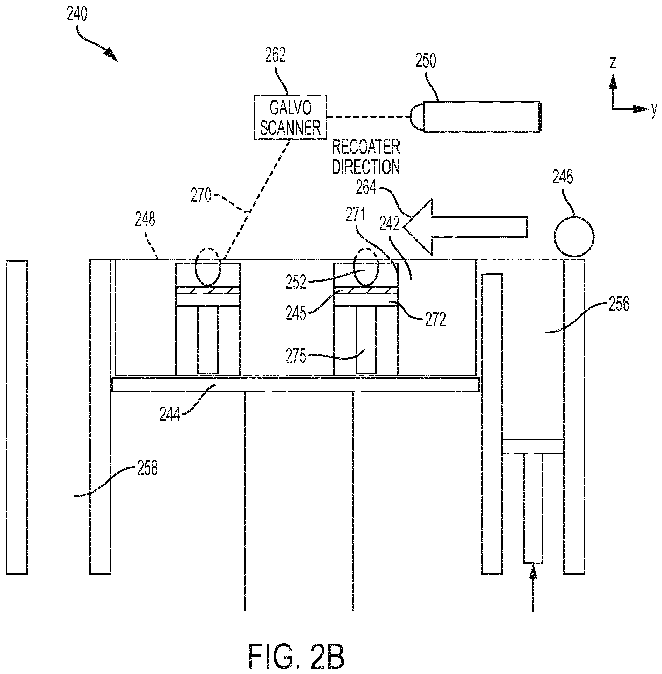

Figs. 2A-2B show an example of an AM apparatus according to the present disclosure. In place of the traditional powder bed (i.e., powder bed 142 in Fig. 1), the apparatus in accordance with an embodiment of the invention includes an insert 242 that restricts the effective size of the powder bed to one or more smaller build zones 243. Each build zone includes a build substrate 245 and one or more walls 271, and optionally further a connecting rod 275 that mechanically links the build substrate(s) 245 and the lower build plate 244. The lower build plate 244 is similar to the conventional build plate 144 shown in Fig. 1. The lower build plate 244 is lowered, which in turn lowers each of the build substrate(s) 245 within the build zone(s) 243, and allows each of the build zones to hold its own powder bed in which an object 252 may be formed. In some aspects, the AM apparatus may accommodate one or more build inserts simultaneously.

The insert 242 is preferably a hollow box positioned above the lower build platform 244, which includes a plurality of openings in separate areas to create individual build zones 243. The upper surface of the insert 242 is a plate with several openings corresponding to the build zones 243. Each build zone 243 includes a build substrate 245. At the beginning of a build operation the build substrate 245 is positioned near the top 248 of the insert 242. During the build operation, the build substrate 245 is lowered into the build zone 243 thereby creating individual powder beds for each part to be built. In other words, the downward movement of build platform 244 creates a recessed first build area and a recessed second build area. Recoater 246 then supplies a layer of powder to each build area, thus forming a first powder bed in the first build area and a second powder bed in the second build area.

In some aspects, each build area, defined by one or more respective walls 271 and a respective substrate 245, is substantially identical, i.e., the same object may be built in both the first and second build areas. In other aspects, the first and second build area differ in geometry in the xy-plane, i.e., the horizontal plane. In other aspects, the first and second build areas differ in geometry in three dimensions, i.e., different objects may be built in the first and second build areas. In some such aspects, the first and second build areas are complementary, i.e., the object 252 built in the first build area and the object 252 built in the second build area may be joined together to form a complete object. In some embodiments, the insert 242 includes a single build area 243 thereby reducing the powder necessary to build a single small part 252.

In some aspects, each substrate 245 more closely approximates the cross-sectional size of the object 252 to be built. The insert 242 is, in some aspects, complementary to size and shape of substrate 245 in at least two dimensions, e.g., the x- and y- directions. Substrate 245 may be made of any material suitable for use with the methods and apparatuses of the present disclosure. In some aspects, substrate 245 is made of the same material as one or more of the powder build material, the object to be built, or the build platform, or is made of a material that does not react with the build material, the object to be built, or the build platform.

In some aspects, substrate 245 is supported within insert 242 by a build support or connecting rod 275, which may be, for example, a piston and comprises an upper portion 272. In some aspects, upper portion 272 contains a liner sandwiched at or near the vertical middle. The liner may minimize passage of powdered build material from a build area 243, i.e., the volume defined by a substrate 245 and a wall 271, downward. The liner may be made of any resilient, pliable material to fill the horizontal (xy) space of an opening and keep the powder from falling downward past the liner, for example, around the build support. As used herein, a "resilient" liner or liner material is one that does not react with the powder build material or environmental conditions that may be present in the build apparatus 240. Suitable materials for the liner include, but are not limited to, foam and felt. The liner may be held in place within upper portion 272 by any suitable means, including, but limited to, one or more bolts or screws.

Movement of recoater 246 across the top plate of insert 242, after lowering of build platform 244, provides powder build material into each of the openings defined by the respective substrate 245 and the one or more walls 271, thus creating respective powder beds in each build area 243. In some aspects, apparatus 240 may contain a waste container 258 for excess powder. In some aspects, the recoater 246 does not pull any excess powder from reservoir 256 beyond the capacity of insert 242 at a given depth.

After recoater 246 provides a layer of powder to insert 242, the powder in insert 242 is fused. In some aspects, fusing may be carried out using an energy source 250, which emits energy beam 270, which is optionally modulated by a radiation emission directing device, such as galvo scanner 262. As used herein, "modulation" of an energy beam 270 by a radiation emission directing device includes one or more of adjusting an angle of the beam from the vertical, adjusting a focus of the beam, and translating a radiation emission directing device in at least one dimension. Suitable radiation emission directing devices for use according to the present disclosure include, but are not limited to, galvo scanners and deflecting coils. In some aspects, a radiation emission directing device may modulate an energy beam from an energy source by bending and/or reflecting the energy beam to scan different regions on a face and/or by xyz motion of the radiation emission directing device. Energy source 250 may be, but is not limited to, a laser source or an electron beam source. In other aspects, fusing is carried out by binder jetting, in which a binder material is applied to selected regions of a powder material to produce a layer of bonded powder material at the selected regions. In such aspects, the mechanism for fusing the build material may include spraying the build material with a binder material. In such aspects, the apparatus 240 includes a mechanism for fusing the build material by binder jetting, such as a binder material spray nozzle, either in addition to or in place of an energy source. Binder jetting according to the present disclosure may be carried out using any suitable methods, materials, and/or equipment known in the art, including but not limited to those disclosed in U.S. Patent Application Publication No. 2002/0106412 and U.S. Patent No. 5,387,380.

After fusing of a layer of powder in each of the first and second build areas, to form first and second fused regions, build platform 244 is lowered, and a subsequent layer of powder may be provided. In some aspects, the fused layer of powder is the final layer of the object 252, and no subsequent layer of powder is provided. In other aspects, the fused layer of powder is the first layer of the object 252, and one or more subsequent layers of powder are provided. In such aspects, the cycle of fusing the powder layer within the first and second build areas, lowering the build platform 244, and providing a subsequent layer of powder using recoater 246 is repeated until the object 252 is completely built. After fusing of the final layer of the object 252, the completed object may be detached from the substrate using any suitable means known to those of ordinary skill in the art, such as using an EDM wire machine. In some aspects, the build supports are configured to step upward upon completion of building of the final layer of the respective objects, for example, so that the substrate 245 is level with the top plate of insert 242, to facilitate removal of the completed objects.

Suitable powder-based build materials for use with the methods and apparatuses of the present disclosure include, but are not limited to, powdered polymers and metals such as cobalt chrome, stainless steels, tooling steel, maraging steel, aluminum alloys, nickel alloys, copper alloys, and titanium alloys, and any other material having material properties attractive for the formation of components using the abovementioned techniques.

The methods and systems of the present disclosure may be used in conjunction with additive printing methods known in the art, including, but not limited to direct metal laser melting (DMLM), fused deposition modeling (FDM), stereolithography (SLA), selective laser melting (SLM), binder jetting, and powder-based processes.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims. Aspects from the various embodiments described, as well as other known equivalents for each such aspect, can be mixed and matched by one of ordinary skill in the art to construct additional embodiments and techniques in accordance with principles of this application.

Thus, the claims are not intended to be limited to the aspects shown herein, but are to be accorded the full scope consistent with the language of the claims, wherein reference to an element in the singular is not intended to mean "one and only one" unless specifically so stated, but rather "one or more."

Further, the word "example" is used herein to mean "serving as an example, instance, or illustration." Any aspect described herein as "example" is not necessarily to be construed as preferred or advantageous over other aspects. Unless specifically stated otherwise, the term "some" refers to one or more. Combinations such as "at least one of A, B, or C," "at least one of A, B, and C," and "A, B, C, or any combination thereof' include any combination of A, B, and/or C, and may include multiples A, multiples of B, or multiples of C. Specifically, combinations such as "at least one of A, B, or C," "at least one of A, B, and C," and "A, B, C, or any combination thereof' may be A only, B only, C only, A and B, A and C, B and C, or A and B and C, where any such combinations may contain one or more member or members of A, B, or C.

## Claims

1. An apparatus (240) for additive manufacturing of at least one object (252), the apparatus comprising:
a build chamber having a powder reservoir (256), a lower build plate (244), and a build insert (242) that restricts the effective size of a powder bed to one or more smaller build zones (243) above the build plate (244), the build insert (242) having at least a first opening with one or more walls (271) defining a first build area within the build insert (242), the first build area being smaller than the area of the build chamber, wherein the build insert (242) is laterally offset from the powder reservoir (256);
a first build support (272) adapted to support powder within the first build area, the first build support (272) configured to step downward within the first build area as the at least one object (252) is being built layer-by-layer;
a connecting rod (275) extending between the build platform (244) and the first build support (272), wherein the first build support (272) is configured to step downward in conjunction with the build platform (244) as the object(s) (252) are being built layer-by-layer; and
a powder coater (246) for distributing a thin layer of powder over the build insert (242) to define a powder bed in the first build area; **characterized in that** the respective build substrates (245) are configured to be individually lowered into the respective build zones (243) thereby creating individual powder beds for each object to be built.

2. The apparatus (240) of claim 1, wherein the insert (242) further comprises a second build area separate from the first build area, the second build area having a second build support (272).

3. The apparatus (240) of claim 1 or claim 2, wherein the first build support (272) comprises a resilient liner that interfaces with the walls of the first build area to reduce or eliminate passage of powder around the first build support (272).

4. The apparatus (240) of claim 2 or claim 3, wherein the first and second build areas are identical in geometry in a horizontal plane.

5. The apparatus (240) of claim 2 or claim 3, wherein the first and second build areas differ in geometry in a horizontal plane.

6. The apparatus (240) of any of claims 2, 3, or 5, wherein the first and second build areas are complementary such that an object (252) built in the first build area and an object (252) built in the second build area may be joined together to form a complete object.

7. A method of additive manufacturing of at least one object (252), the method comprising:
(a) fusing at least a first portion of a given layer of build material above a first build support (272), the first build support (272) provided within a build area defined by the build support (272) and one or more walls (271) of a build insert (242) that restricts the effective size of a powder bed to one or more smaller build zones (243) located above a lower support plate (244) and laterally offset form a powder reservoir (256) within a build chamber;
(b) providing a subsequent layer of the build material over the first fused region, wherein the first build support (272) is configured to step downward within the first build area in conjunction with the lower support plate (244) as the at least one object (252) is being built layer-by-layer, wherein the first build support (272) is supported above the lower support plate (244) by a connecting rod (275) extending between the lower support plate (244) and the first build support (272); and
(c) repeating steps (a) and (b) until the at least one object (252) is formed in the first build area; **characterized in that**
the respective build substrates (245) are individually lowered into the respective build zones (243) thereby creating individual powder beds for each object to be built.

8. The method of claim 7, wherein the first build support (272) is configured to receive a substrate (245), wherein the substrate (245) is a near-net shape of the object (252), and wherein the substrate (245) defines a floor of the first build area.

9. The method of claim 7 or claim 8, wherein:
step (a) further comprises fusing at least a second portion of a given layer of build material to form a second fused region located in a second build area, the second build area defined by a second opening in the build insert, and the second build area being supported by a second build support (272);
step (b) further comprises providing a subsequent layer of the build material over the second fused region; and
step (c) comprises repeating steps (a) and (b) until a first object is formed in the first build area and a second object (252) is formed in the second build area.

10. The method of claim 9, wherein the first and second build areas are identical in geometry in a horizontal plane.

11. The method of claim 9, wherein the first and second build areas differ in geometry in a horizontal plane.

12. The method of claim 9 or claim 11, wherein the first and second build areas are complementary such that an object (252) built in the first build area and an object (252) built in the second build area may be joined together to form a complete object.

13. The method of any of claims 9-12, wherein each of the first and second build areas is supported by a build support (272) adapted to support powder within the respective build area and configured to step downward as the objects (272) are being built layer-by-layer.

14. The method of claim 13, wherein step (b) comprises stepping downward the first and second build supports (272) prior to providing the subsequent layer of build material, such that a floor of each of the first and second build areas is recessed relative to the plane of the build level.

15. The method of any of claims 7-14, wherein the first build support (272) comprises a resilient liner that interfaces with the one or more walls (271) of the first build area to reduce or eliminate passage of powder around the first build support (272).

## Patentansprüche

1. Vorrichtung (240) zur additiven Fertigung von mindestens einem Objekt (252), wobei die Vorrichtung aufweist:
eine Baukammer mit einem Pulverreservoir (256), einer unteren Bauplatte (244) und einem Baueinschub (242), der die wirksame Größe eines Pulverbetts auf eine oder mehrere kleinere Bauzonen (243) oberhalb der Bauplatte (244) beschränkt, wobei der Baueinschub (242) zumindest eine erste Öffnung mit einer oder mehreren Wandungen (271) aufweist, die innerhalb des Baueinschubs (242) einen ersten Baubereich definieren, wobei der erste Baubereich kleiner ist als die Fläche der Baukammer, wobei der Baueinschub (242) von dem Pulverreservoir (256) seitlich versetzt ist;
eine erste Bauauflage (272), die ausgelegt ist, Pulver innerhalb des ersten Baubereichs zu tragen, wobei die erste Bauauflage (272) eingerichtet ist, um sich innerhalb des ersten Baubereichs in dem Maße stufenweise abzusenken, in dem das mindestens eine Objekt (252) schichtweise aufgebaut wird;
eine Verbindungsstange (275), die sich zwischen der Bauplattform (244) und der ersten Bauauflage (272) erstreckt, wobei die erste Bauauflage (272) eingerichtet ist, um sich gemeinsam mit der Bauplattform (244) in dem Maße stufenweise abzusenken, in dem das/die Objekt(e) (252) schichtweise aufgebaut werden; und
eine Pulverbeschichtungseinrichtung (246) zum Verteilen einer dünnen Schicht aus Pulver über den Baueinschub (242), um in dem ersten Baubereich ein Pulverbett zu definieren; **dadurch gekennzeichnet, dass**
die jeweiligen Bausubstrate (245) eingerichtet sind, um einzeln in die jeweiligen Bauzonen (243) abgesenkt zu werden, wodurch einzelne Pulverbetten für jedes zu bauende Objekt erzeugt werden.

2. Vorrichtung (240) nach Anspruch 1, wobei der Einschub (242) ferner einen von dem ersten Baubereich getrennten zweiten Baubereich aufweist, wobei der zweite Baubereich eine zweite Bauauflage (272) aufweist.

3. Vorrichtung (240) nach Anspruch 1 oder Anspruch 2, wobei die erste Bauauflage (272) eine elastische Auskleidung aufweist, die mit den Wandungen des ersten Baubereichs zusammenwirkt, um ein Hindurchgelangen von Pulver um die erste Bauauflage (272) herum zu verringern oder zu verhindern.

4. Vorrichtung (240) nach Anspruch 2 oder Anspruch 3, wobei der erste und der zweite Baubereich in einer Horizontalebene eine identische Geometrie aufweisen.

5. Vorrichtung (240) nach Anspruch 2 oder Anspruch 3, wobei der erste und der zweite Baubereich in einer Horizontalebene eine unterschiedliche Geometrie aufweisen.

6. Vorrichtung (240) nach einem der Ansprüche 2, 3 oder 5, wobei der erste und der zweite Baubereich derart komplementär sind, dass ein in dem ersten Baubereich gebautes Objekt (252) und ein in dem zweiten Baubereich gebautes Objekt (252) aneinandergefügt werden können, um ein vollständiges Objekt zu bilden.

7. Verfahren zur additiven Fertigung von mindestens einem Objekt (252), wobei das Verfahren umfasst:
(a) Aufschmelzen von zumindest einem ersten Abschnitt einer bestimmten Schicht aus Baumaterial oberhalb einer ersten Bauauflage (272), wobei die erste Bauauflage (272) innerhalb eines Baubereichs bereitgestellt ist, der von der Bauauflage (272) und einer oder mehreren Wandungen (271) eines Baueinschubs (242) definiert wird, der die wirksame Größe eines Pulverbetts auf eine oder mehrere kleinere Bauzonen (243) beschränkt, die oberhalb einer unteren Stützplatte (244) liegen und von einem Pulverreservoir (256) innerhalb einer Baukammer seitlich versetzt sind;
(b) Bereitstellen einer nachfolgenden Schicht aus Baumaterial über den ersten aufgeschmolzenen Bereich, wobei die erste Bauauflage (272) eingerichtet ist, um sich innerhalb des ersten Baubereichs gemeinsam mit der unteren Stützplatte (244) in dem Maße stufenweise abzusenken, in dem das mindestens eine Objekt (252) schichtweise aufgebaut wird, wobei die erste Bauauflage (272) oberhalb der unteren Stützplatte (244) von einer Verbindungsstange (275) gelagert wird, die sich zwischen der unteren Stützplatte (244) und der ersten Bauauflage (272) erstreckt; und
(c) Wiederholen der Schritte (a) und (b), bis das mindestens eine Objekt (252) in dem ersten Baubereich gebildet ist;
**dadurch gekennzeichnet, dass**
die jeweiligen Bausubstrate (245) einzeln in die jeweiligen Bauzonen (243) abgesenkt werden, wodurch einzelne Pulverbetten für jedes zu bauende Objekt erzeugt werden.

8. Verfahren nach Anspruch 7, wobei die erste Bauauflage (272) eingerichtet ist, um ein Substrat (245) aufzunehmen, wobei das Substrat (245) eine nahezu netzartige Form des Objekts (252) ist und wobei das Substrat (245) einen Boden des ersten Baubereichs definiert.

9. Verfahren nach Anspruch 7 oder Anspruch 8, wobei:
Schritt (a) ferner Aufschmelzen von zumindest einem zweiten Abschnitt einer bestimmten Schicht aus Baumaterial umfasst, um einen zweiten aufgeschmolzenen Bereich zu bilden, der sich in dem zweiten Baubereich befindet, und wobei der zweite Baubereich von einer zweiten Bauauflage (272) getragen wird;
Schritt (b) ferner Bereitstellen einer nachfolgenden Schicht des Baumaterials über den zweiten aufgeschmolzenen Bereich umfasst; und
Schritt (c) Wiederholen der Schritte (a) und (b) umfasst, bis in dem ersten Baubereich ein erstes Objekts gebildet ist und in dem zweiten Baubereich ein zweites Objekt (252) gebildet ist.

10. Verfahren nach Anspruch 9, wobei der erste und der zweite Baubereich in einer Horizontalebene eine identische Geometrie aufweisen.

11. Verfahren nach Anspruch 9, wobei der erste und der zweite Baubereich in einer Horizontalebene eine unterschiedliche Geometrie aufweisen.

12. Verfahren nach Anspruch 9 oder Anspruch 11, wobei der erste und der zweite Baubereich derart komplementär sind, dass ein in dem ersten Baubereich gebautes Objekt (252) und ein in dem zweiten Baubereich gebautes Objekt (252) aneinandergefügt werden können, um ein vollständiges Objekt zu bilden.

13. Verfahren nach einem der Ansprüche 9-12, wobei jeder des ersten und des zweiten Baubereichs von einer Bauauflage (272) getragen wird, die ausgelegt ist, Pulver innerhalb des jeweiligen Baubereichs zu tragen, und eingerichtet ist, um sich in dem Maße stufenweise abzusenken, in dem die Objekte (272) schichtweise aufgebaut werden.

14. Verfahren nach Anspruch 13, wobei Schritt (b) stufenweises Absenken der ersten und der zweiten Bauauflage (272) vor Bereitstellen der nachfolgenden Schicht aus Baumaterial derart, dass ein Boden von jeweils dem ersten und dem zweiten Baubereich in Bezug auf die Ebene der Bauebene vertieft ist, umfasst.

15. Verfahren nach einem der Ansprüche 7-14, wobei die erste Bauauflage (272) eine elastische Auskleidung aufweist, die mit einer oder mehreren Wandungen (271) des ersten Baubereichs zusammenwirkt, um ein Hindurchgelangen von Pulver um die erste Bauauflage (272) herum zu verringern oder zu verhindern.

## Revendications

1. Appareil (240) destiné à la fabrication additive d'au moins un objet (252), l'appareil comprenant :
une chambre de construction comportant un réservoir de poudre (256), une plaque de construction inférieure (244) et une pièce rapportée de construction (242) destinée à restreindre la dimension effective d'un lit de poudre à une ou plusieurs zones de construction plus petites (243) au-dessus de la plaque de construction (244), la pièce rapportée de construction (242) comportant au moins une première ouverture dotée d'une ou plusieurs parois (271) définissant une première zone de construction à l'intérieur de la pièce rapportée de construction (242), la première zone de construction étant plus petite que la zone de la chambre de construction, la pièce rapportée de construction (242) étant décalée latéralement du réservoir de poudre (256) ;
un premier support de construction (272) adapté à porter de la poudre à l'intérieur de la première zone de construction, le premier support de construction (272) étant conçu pour se déplacer vers le bas à l'intérieur de la première zone de construction à mesure que le ou les objets (252) sont en cours de construction couche par couche ;
une tige de liaison (275) s'étendant entre la plaque de construction (244) et le premier support de construction (272), le premier support de construction (272) étant conçu pour se déplacer vers le bas conjointement avec la plaque de construction (244) à mesure que le ou les objets (252) sont en cours de construction couche par couche ; et
un dispositif de revêtement en poudre (246) permettant de distribuer une couche mince de poudre sur la pièce rapportée de construction (242), afin de définir un lit de poudre dans la première zone de construction ;
**caractérisé en ce que**
les substrats de construction respectifs (245) sont conçus pour être abaissés individuellement vers les zones de construction respectives (243), créant ainsi des lits de poudre individuels pour chaque objet à construire.

2. L'appareil (240) de la revendication 1, dans lequel la pièce rapportée (242) comprend en outre une seconde zone de construction séparée de la première zone de construction, la seconde zone de construction comportant un second support de construction (272).

3. L'appareil (240) de la revendication 1 ou de la revendication 2, dans lequel le premier support de construction (272) comprend une garniture élastique faisant interface avec les parois de la première zone de construction, afin de réduire ou d'éliminer le passage de poudre autour du premier support de construction (272).

4. L'appareil (240) de la revendication 2 ou de la revendication 3, dans lequel les première et seconde zones de construction présentent une géométrie identique dans un plan horizontal.

5. L'appareil (240) de la revendication 2 ou de la revendication 3, dans lequel les première et seconde zones de construction présentent une géométrie différente dans un plan horizontal.

6. L'appareil (240) de l'une quelconque des revendications 2, 3 ou 5, dans lequel les première et seconde zones de construction sont complémentaires, de sorte qu'un objet (252) construit dans la première zone de construction, et un objet (252) construit dans la seconde zone de construction, puissent être assemblés pour former un objet complet.

7. Procédé de fabrication additive d'au moins un objet (252), le procédé comprenant :
(a) la fusion d'au moins une première partie d'une couche donnée de matériau de construction au-dessus d'un premier support de construction (272), le premier support de construction (272) étant disposé à l'intérieur d'une zone de construction définie par le support de construction (272) et une ou plusieurs parois (271) d'une pièce rapportée de construction (242) destinée à restreindre la dimension effective d'un lit de poudre à une ou plusieurs zones de construction plus petites (243) situées au-dessus d'une plaque de support inférieure (244) et décalées latéralement d'un réservoir de poudre (256) à l'intérieur d'une chambre de construction ;
(b) l'application d'une couche suivante du matériau de construction sur la première région fusionnée, le premier support de construction (272) étant conçu pour se déplacer vers le bas à l'intérieur de la première zone de construction conjointement avec la plaque de support inférieure (244) à mesure que le ou les objets (252) sont en cours de fabrication couche par couche, le premier support de construction (272) étant porté au-dessus de la plaque de support inférieure (244) par une tige de liaison (275) s'étendant entre la plaque de support inférieure (244) et le premier support de construction (272) ; et
(c) la répétition des étapes (a) et (b) jusqu'à formation du ou des objets (252) dans la première zone de construction ;
**caractérisé en ce que**
les substrats de construction respectifs (245) sont abaissés individuellement vers les zones de construction respectives (243), créant ainsi des lits de poudre individuels pour chaque objet à construire.

8. Le procédé de la revendication 7, dans lequel le premier support de construction (272) est conçu pour recevoir un substrat (245), dans lequel le substrat (245) est une forme extrêmement précise de l'objet (252), et dans lequel le substrat (245) définit un plancher de la première zone de construction.

9. Le procédé de la revendication 7 ou de la revendication 8, dans lequel :
l'étape (a) comprend en outre la fusion d'au moins une seconde partie d'une couche donnée de matériau de construction, afin de former une seconde région fusionnée située dans une seconde zone de construction, la seconde zone de construction étant définie par une seconde ouverture dans la pièce rapportée de construction, et la seconde zone de construction étant portée par un second support de construction (272) ;
l'étape (b) comprend en outre l'application d'une couche suivante du matériau de construction sur la seconde région fusionnée ; et
l'étape (c) comprend la répétition des étapes (a) et (b) jusqu'à formation d'un premier objet dans la première zone de construction et d'un second objet (252) dans la seconde zone de construction.

10. Le procédé de la revendication 9, dans lequel les première et seconde zones de construction présentent une géométrie identique dans un plan horizontal.

11. Le procédé de la revendication 9, dans lequel les première et seconde zones de construction présentent une géométrie différente dans un plan horizontal.

12. Le procédé de la revendication 9 ou de la revendication 11, dans lequel les première et seconde zones de construction sont complémentaires, de sorte qu'un objet (252) construit dans la première zone de construction, et un objet (252) construit dans la seconde zone de construction, puissent être assemblés pour former un objet complet.

13. Le procédé de l'une quelconque des revendications 9-12, dans lequel chaque zone, parmi les première et seconde zones de construction, est portée par un support de construction (272) adapté à porter de la poudre à l'intérieur de la zone de construction respective et conçu pour se déplacer vers le bas à mesure que le ou les objets (252) sont en cours de construction couche par couche.

14. Le procédé de la revendication 13, dans lequel l'étape (b) comprend le déplacement vers le bas des premier et second supports de construction (272) avant l'application de la couche suivante de matériau de construction, de sorte qu'un plancher de chaque zone, parmi les première et seconde zones de construction, soit évidé par rapport au plan du niveau de construction.

15. Le procédé de l'une quelconque des revendications 7-14, dans lequel le premier support de construction (272) comprend une garniture élastique faisant interface avec la ou les parois (271) de la première zone de construction, afin de réduire ou d'éliminer le passage de poudre autour du premier support de construction (272).
